# EUROPÄISCHE PATENTANMELDUNG

(11) **EP 2 636 770 A2**
(43) Veröffentlichungstag der Anmeldung: **11.09.2013**
(21) Anmeldenummer: 13156883.4
(22) Anmeldetag: 27.02.2013
(51) Int. Cl.: C25D 5/14, C25D 7/10, F16C 33/00

(54) **Haftfeste, korrosionsbeständige technische Verchromung**

(30) Priorität: 07.03.2012 DE 102012004356
(71) Anmelder: Umicore Galvanotechnik GmbH, 73525 Schwäbisch Gmünd (DE)
(72) Erfinder: Leyendecker, Klaus, 73557 Mutlangen (DE); Wirth, Guenter, 73560 Boebingen (DE)
(74) Vertreter: Retzow, Stefan

(57) **Zusammenfassung**

Die vorliegende Veröffentlichung bezieht sich auf eine auf einen metallischen Träger aufgebrachte Chromschicht mit für technische Einsatzgebiete vorteilhaften Eigenschaften sowie ein entsprechendes Verfahren zur Herstellung derselben. Die Chromschicht zeichnet sich dadurch aus, dass sie auf verschiedene metallische Unterschichten aufgebracht wird, welche dazu beitragen, die Chromschicht extrem haftfest und korrosionsbeständig auszugestalten.

Der Chromschichtaufbau auf den metallischen Trägermaterial weist auf:

a) eine Schicht aus Gold oder Nickel mit einer Dicke zwischen 0,01 - 3 µm;

b) eine Schicht aus einer Nickel-Phosphor-Legierung mit einer Dicke zwischen 2 - 30 µm;

c) eine Schicht aus Gold oder Nickel mit einer Dicke zwischen 0,01 - 3 µm, und abschließend;

d) eine Chromschicht mit einer Dicke zwischen 2 - 30 µm.

## Beschreibung

Die vorliegende Erfindung bezieht sich auf eine auf einen metallischen Träger aufgebrachte Chromschicht mit für technische Einsatzgebiete vorteilhaften Eigenschaften sowie ein entsprechendes Verfahren zur Herstellung derselben. Die Chromschicht zeichnet sich dadurch aus, dass sie auf verschiedene metallische Unterschichten aufgebracht wird, welche dazu beitragen, die Chromschicht extrem haftfest und korrosionsbeständig auszugestalten.

Die Aufbringung von haftfesten und korrosionsbeständigen Chromschichten auf technischen Gegenständen ist dem Fachmann geläufig. Dieser als Hartverchromung bezeichnete Prozess findet vor allen Dingen Anwendung bei der Verchromung von Gegenständen, welche einer erhöhten Reibung ausgesetzt sind. Derartige Bauteile können zum Beispiel Stoßdämpferkolben, Kolben für Gasdruckdämpfer und Hydraulikteile sein. Die Korrosionsbeständigkeit einer Chromschicht, welche in den genannten Vorrichtungen eingesetzt wird, muss besonderen Anforderungen gerecht werden. Entsprechend hohe Korrosionsbeständigkeiten werden z.B. erzielt, wenn eine geeignete aus elektrolytischen oder autokatalytischen Bädern abgeschiedene Nickelschicht unter der Chromschicht vorhanden ist. Mit derartigen Schichtaufbauten können Korrosionsbeständigkeiten von mehr als 500 h im Salzsprühtest erzielt werden (Die galvanische Verchromung, in Schriftenreihe Galvanotechnik und Oberflächenbehandlung; Günther A. Lausmann, Jürgen N. Unruh, 2006, Eugen G. Leuze Verlag, S. 307).

In der US 1774269 wird schon ein grundlegendes Verfahren zur Hartverchromung angegeben, bei dem ein Grundmaterial aus Stahl zuerst anodisch in einer chromsäurehaltigen Umgebung mit einer Chromatschicht überzogen wird. Anschließend erfolgt die Abscheidung einer Nickelschicht auf dem braunen Oberflächenfilm. Auf diese Nickelschicht wird dann schlussendlich die gewünschte Chromschicht elektrochemisch abgeschieden. Es wird ausgeführt, dass eine derart hergestellte Schichtfolge extrem widerstandsfähig gegenüber dem Abplatzen von Schichten oder der Bildung von Rissen ist.

Auch die EP 175901 offenbart ein Verfahren zur Herstellung von beschichteten Metallstücken. Hier wird ein eisenhaltiger Grundkörper zuerst mit einer Nickelschicht versehen, die anschließend von einer Goldschicht gefolgt wird. Hierauf werden wiederum eine Nickelschicht und anschließend eine Goldschicht abgeschieden. Die derart hergestellten Gegenstände sollen eine extrem hohe Korrosionsbeständigkeit aufweisen.

Schließlich schlägt die EP 1997939 A vor, einen Eisen aufweisenden Träger wie zum Beispiel einen Hydraulikzylinder, insbesondere eine Kolbenstange, mit einer elektrochemisch aufgebrachten Außenschicht aus Chrom zu versehen. Kern der dort dargestellten Erfindung ist die Tatsache, dass im Bereich der Laufflächen eines Hydraulikzylinders auf dem Grundträger eine elektrochemisch aufgebrachte Zwischenschicht aus Nickel-Phosphor abgeschieden wird und dass direkt über dieser Zwischenschicht die Außenschicht aus Chrom angebracht ist. Es wird davon berichtet, dass eine gegenüber dem gattungsgemäßen Stand der Technik zehnmal größere Standzeit im Salz-Sprüh-Test (SST) bei dennoch verminderter Dicke der Hartchromschicht erzielt werden kann.

Die letztgenannte Veröffentlichung geht zur Herstellung der dort beanspruchten Gegenstände davon aus, dass zunächst auf dem das Eisen aufweisenden Träger elektrochemisch in einem ersten Bad die Nickel-Phosphor-Legierung als Zwischenschicht abgeschieden wird und dass das Bauteil anschließend in das Verchromungsbad verbracht wird, in welchem es dann kathodisch mit Chrom beschichtet wird. Die Vorgehensweise kann dabei direkt durch eine "nass-in-nass"-Verchromung erfolgen oder auch durch eine "trocken-in-nass"-Verchromung. Bei Letzterer wird das Bauteil nach der Abscheidung der Nickel-Phosphor-Legierung zuerst einer Trocknung unterzogen, bevor die Chromschicht abschließend aufgebracht wird. Dabei zeigt die Praxis jedoch, dass die innige Verbindung zwischen der Nickel-Phosphor-Schicht und der abschließenden Chromschicht nicht so einfach herzustellen ist. Beispielsweise muss die Chromschicht direkt auf die metallische, nicht oxidierte oder nicht anderweitig passivierte Nickel-Phosphor-Schicht abgeschieden werden, was mit unterschiedlich einzustellenden und sich dynamisch ändernden Stromdichten in mehreren aufeinander folgenden Zeitintervallen erreicht werden kann. Wichtig ist zu vermerken, dass viele Spülschritte notwendig sind, um ein vorteilhaftes Bauteil zu erzeugen. Trotz dieser aufwändigen Vor- und Zwischenbehandlungen treten bei der hier beschriebenen Schichtenfolge häufig Probleme dergestalt auf, dass beim erfindungsgemäßen Gebrauch der Schichten ein Abplatzen der Chromschicht zu verzeichnen ist. Dies bedingt ein Qualitätsrisiko, welches mit Blick auf die Einsatzzwecke schlussendlich auch ein Sicherheitsrisiko darstellt. Daher besteht immer noch der Wunsch nach hoch korrosionsbeständigen jedoch auch haftfesten Chromschichten, welche sich in einem gut reproduzierbaren und handhabbaren Verfahren herstellen lassen.

Aufgabe der vorliegenden Erfindung war es deshalb, ein Verfahren und eine entsprechend hergestellte Chromschicht bzw. einen Chromschichtaufbau anzugeben, welche(s) den eben genannten Forderungen möglichst optimal gerecht wird. Das Verfahren sollte darüber hinaus vom ökonomischen und ökologischen Standpunkt aus gesehen den Verfahren des Standes der Technik überlegen sein. Der erfindungsgemäß hergestellte Chromschichtaufbau sollte neben einer extrem guten Korrosionsbeständigkeit auch entsprechend haftfest sein, um ein Abplatzen der Chromschicht während des Einsatzes derartiger Gegenstände möglichst vollständig ausschließen zu können.

Diese und weitere, sich aus dem Stand der Technik für den Fachmann in nahe liegender Weise ergebenden Aufgaben werden durch einen Chromschichtaufbau mit den kennzeichnenden Merkmalen des vorliegenden Anspruchs 1 sowie durch die Angabe eines entsprechenden Verfahrens gemäß Anspruch 10 gelöst. Die von Anspruch 1 abhängigen Unteransprüche sind auf bevorzugte Ausführungsformen des ins Auge gefassten Aufbaus gerichtet.

Ein entsprechend haftfester und korrosionsbeständiger Chromschichtaufbau auf einem metallischen Trägermaterial lässt sich erreichen, wenn auf dem Träger von innen nach außen gesehen eine metallische Schichtenfolge elektrochemisch aufgebracht ist, aufweisend:
a) eine Schicht aus Gold oder Nickel mit einer Dicke zwischen 0,01 - 3 µm;
b) eine Schicht aus einer Nickel-Phosphor-Legierung mit einer Dicke zwischen 2 - 30 µm;
c) eine Schicht aus Gold oder Nickel mit einer Dicke zwischen 0,01 - 3 µm, und abschließend;
d) eine Chromschicht mit einer Dicke zwischen 2 - 30 µm.

Die Lösung der gestellten Aufgabe gelingt so äußerst einfach, dafür aber nicht minder vorteilhaft. Durch den Einbau von dünnen Gold- oder Nickelschichten jeweils zwischen dem metallischen Träger, der Nickel-Phosphor-Schicht und der abschließende Chromschicht wird die Haftvermittlung zwischen den letztgenannten Metallschichten derart gesteigert, dass eine überragende Haftfestigkeit der Chromschicht resultiert.

Es hat sich als vorteilhaft erwiesen, wenn die Schicht (a und c) aus Gold oder Nickel eine Dicke von 0,05-2 µm, ganz besonders bevorzugt von 0,1-1 µm aufweist. Die Nickel-Phosphor-Schicht kann wie in der EP1997939 ausgestaltet sein und eine bevorzugte Dicke von 3-25 µm, ganz besonders bevorzugt von 5-20 µm aufweisen. Letztlich kann die Dicke der finalen Chromschicht bevorzugt zwischen 3-25 µm, besonders bevorzugt zwischen 5-20 µm liegen.

Unter der Haftfestigkeit wird erfindungsgemäß die Kraft verstanden, die notwendig ist, zwei Metallschichten voneinander oder eine Metallschicht von einem Substrat zu trennen. Die Haftfestigkeit ist im Falle einer metallischen Bindung, wie sie bei der erfindungsgemäßen Ausführung erreicht wird, nicht direkt messbar. Die Haftfestigkeit wird vielmehr indirekt z.B. durch einen Biegeversuch (Verbiegung des beschichteten Trägermaterials) ermittelt. Die Begutachtung der Biegestelle kann hervorragende Ergebnisse (keine Abhebung oder Abplatzung der aufgebrachten Schichten vom Substrat oder voneinander), mittlere (geringste Abplatzung) oder schlechte Ergebnisse der Haftfestigkeit liefern. Im letzten Fall heben sich Schichten flächig von der unteren Schicht oder dem Substrat ab.

In einer vorteilhaften Ausgestaltung der vorliegenden Erfindung besitzt der so geschaffene Chromschichtaufbau auf dem metallischen Trägermaterial eine Haftfestigkeit die nahezu (bis mehr als 80%, bevorzugt 90% und besonders bevorzugt mehr als 95%) der entsprechenden metallischen Bindung des jeweiligen Substrats entspricht. Dieses Ergebnis kann vorteilhaft ohne aufwendige weitere Zwischenschritte erzielt werden, wenn die erfindungsgemäßen Zwischenschichten aufgebracht werden.

Die Korrosionsbeständigkeit des erfindungsgemäßen Chromschichtaufbaus ist gegenüber den Lehren des Standes der Technik nicht verschlechtert. Die Korrosionsbeständigkeit wird erfindungsgemäß im so genannten Salzsprühtest oder der Salznebelprüfung nach DIN 50021-SS bestimmt. Er beträgt über 500, bevorzugt über 700 und ganz bevorzugt über 1000 h.

Als metallische Grundträger kommen alle für den Fachmann nahe liegenden technischen Bauteile in Betracht, auf die eine Chromschicht aufgetragen werden sollte. Aufgrund der Tatsache, dass Chrom sehr gute Gleit- und Verschleißeigenschaften besitzt, werden mit Chrom beschichtete technische Gegenstände häufig in Bereichen eingesetzt, wo Metallschichten aufeinander reiben. Dies ist z.B. bei Lagern, Stoßdämpfern, Hydraulikzylindern oder -stößeln der Fall. Hier kommt es vor allen Dingen auch auf eine gute Dichtheit und damit auf eine optimal ebene Oberfläche an. Unebenheiten ergeben sich u.a. vor allen Dingen dann, wenn eine Korrosion auf der Oberfläche einsetzt. Insbesondere kommen daher für die vorliegende Erfindung solche metallischen Gerätschaften in Betracht, die eine möglichst ebene Oberfläche in einer relativ korrosiven Umgebung bewahren müssen. Vorteilhafterweise ist dies bei solchen metallischen Trägermaterialien der Fall, welche ausgewählt sind aus der Gruppe bestehend aus Kolbenstangen, Zylinderkolben, Hydraulikstößel und Stoßdämpfern. Ganz besonders bevorzugt sind Kolbenstangen eines Hydraulikzylinders in diesem Zusammenhang zu nennen.

Die vorzugsweise auf dem metallischen Träger aufzubringende innere Gold- bzw. Nickelschicht kann vorzugsweise durch elektrolytische Verfahren abgeschieden werden. Verfahren hierzu sind dem Fachmann hinlänglich bekannt (Technologie der Galvanotechnik, Gaida, Aßmann, 1996, Leuze-Verlag).

Die auf der Nickel- oder Goldschicht vorteilhafter Weise abzuscheidende Nickel-Phosphor-haltige Schicht kann autokatalytisch oder elektrolytisch abgeschieden werden. Dies kann analog der Lehre der EP1997939 erfolgen.

Die äußere Gold- bzw. Nickelschicht kann bevorzugt elektrolytisch auf der Nickel-Phosphor-Schicht abgeschieden werden. Der Fachmann weiß wie er diesbezüglich vorzugehen hat (siehe oben).

Die abschließende, äußere Chromschicht wird dagegen elektrolytisch aus einem Elektrolyten aufweisend Chrom überwiegend in der Oxidationsstufe +IV abgeschieden. Vorteilhafterweise liegt sie direkt auf der haftvermittelnden Nickel- oder Goldunterschicht. Vorzugsweise erfolgt die Abscheidung aus einem Elektrolyten, der im Rahmen des technisch Machbaren und wirtschaftlich Sinnvollen fast ausschließlich ChromIonen gelöst in der Oxidationsstufe +IV aufweist. Verfahren hierzu sind dem Fachmann hinlänglich bekannt (Technologie der Galvanotechnik, Gaida, Aßmann, 1996, Leuze-Verlag).

Die Aufgabe der haftvermittelnden Schicht ist zum einen, eine gute Haftfestigkeit auf der Unterschicht bzw. dem Substrat erreichen zu können. Zum anderen lassen sich die haftvermittelnden Schichten ohne weitere komplizierte Zwischenschritte mit anderen Metallen weiter beschichten.

Ganz besonders bevorzugt ist die Ausführungsform, in der die eben genannten Schichten direkt aufeinander sitzen. Dies bedeutet, dass keine weitere metallische Schicht zwischen der erfindungsgemäßen Schichtenfolge vorhanden sein muss, um die entsprechende Haftfestigkeit bzw. Korrosionsbeständigkeit zu gewährleisten.

In einer weiteren Ausgestaltung bezieht sich die vorliegende Erfindung auf ein Verfahren zur Herstellung eines erfindungsgemäßen Chromschichtaufbaus, wobei man auf einen metallischen Träger
a) eine Schicht aus Gold oder Nickel mit einer Dicke zwischen 0,01 - 3 µm;
b) eine Schicht aus einer Nickel-Phosphor-Legierung mit einer Dicke zwischen 2 - 30 µm;
c) eine Schicht aus Gold oder Nickel mit einer Dicke zwischen 0,01 - 3 µm, und abschließend;
d) eine Chromschicht mit einer Dicke zwischen 2 - 30 µm;
elektrochemisch aufbringt. Es versteht sich von selbst, dass die eben für die erfindungsgemäße Chromschicht und den Aufbau der Schichtenfolge genannten bevorzugten Ausführungsformen entsprechend auch für das hier beanspruchte Verfahren gelten. In den Beispielen sind weitere Grenzen für Stromdichten, Konzentrationen, pH-Wert und Temperaturen angegeben, die im Aufbau der jeweiligen Schicht bevorzugt einhalten sind.

Der Fachmann geht bei der Ausführung des Verfahrens im Allgemeinen wie folgt vor:
- Vorbereiten und Reinigen des Substrates (1)
- Abscheiden einer haftvermittelnden Schicht aus Nickel oder Gold (2)
- Vorbereiten für den nächsten Schritt (3)
- chemisches oder elektrochemisches Abscheiden einer Nickel-Phosphor-Legierungsschicht (4)
- Vorbereiten für den nächsten Schritt (5)
- Abscheiden einer haftvermittelnden Schicht aus Nickel oder Gold (6)
- Vorbereiten für den nächsten Schritt (7)
- Abscheiden einer Chromschicht (8)
- Nachbereiten, Trocknen. (9)

Von Vorteil kann es sein, dass bei dem Abscheiden der erfindungsgemäßen Schichtenfolge Schritte zum elektrolytischen Reinigen, Entfetten, Spülen und Aktivieren der jeweiligen Grundlage für die Abscheidung eingebaut werden. So können die Vorbereitungsschritte im eben genannten Verfahrensgang diese Aktivitäten umfassen. Bevorzugt geht man bei der Vorbereitung für den jeweils nächsten elektrochemischen Schritt wie folgt vor:
- Spülen in einer Sparspüle
- mehrmaliges Spülen in Wasser bevorzugt in Kaskadenspültechnik

Abschließend erfolgt ein Trocknen der erhaltenen mit Chrom beschichteten Gegenstände.

Unter dem Begriff elektrochemisch wird erfindungsgemäß verstanden, dass derartige Verfahren sowohl stromlos (z.B. autokatalytisch) als auch unter Verwendung von externen Stromquellen (z.B. elektrolytisch) vonstattengehen.

Das vorliegende Verfahren und die dergestalt mit einer Chromschicht versehenen technischen Gerätschaften sind denen des Standes der Technik überlegen. Zumindest die Haftfestigkeit der äußeren Chromschicht ist gegenüber der aus dem Patent EP 1997939 deutlich überlegen. Dabei ist es nicht notwendig, die rel. aufwendige Stromdichtekontrolle zur Abscheidung der Chromschicht, wie sie in der zitierten Schrift propagiert wird, einzuhalten. Auch die Korrosionsbeständigkeit kann gegenüber der Chromschicht aus der EP 1997939 weiter gesteigert werden. Dies war vor dem Hintergrund des Standes der Technik nicht ohne weiteres vorhersehbar.

### Beipiele

Geeignet als Verfahren zur Vorbereitung des Substrates (1) sind folgende Verfahren:

Zur Vorreinigung: Abkochentfettung, z.B. Umicore Abkochentfettung 6002, Fa. Umicore Galvanotechnik
Komponenten
- Ansatzsalz 30 g/l (20 - 40 g/l)
- Weitere Komponenten nach Herstellerangabe

Arbeitsbedingungen:
- pH-Wert 9 (7 - 10)
- Temperatur 60 °C (40 - 80 °C)

Zur elektrolytischen Entfettung, z.B. Umicore Entfettung 6032, Fa. Umicore Galvanotechnik

Komponenten
- Ansatzsalz 60 g/l (50 - 100 g/l)
- Weitere Komponenten nach Herstellerangabe

Arbeitsbedingungen:
- pH-Wert 11,5 (10 - 13)
- Temperatur 55 °C (40 - 60 °C)
- Stromdichte 12 A/dm² (5 - 15 A/dm²)

Zur Aktivierung und Neutralisation, z.B. eine Salzsäurebeize

Komponenten
- Salzsäure 5 % (3 - 7 Vol.%)
- Beizinhibitor 0,1 % (0,05 - 0,15 Vol. %)

Arbeitsbedingungen:
- pH-Wert < 1
- Temperatur 22 °C (20 - 25 °C)

Geeignet als Verfahren zur Aufbringung der haftvermittelnden Schichten von entweder Gold oder Nickel (2, 6), sowie von Nickel-Phosphor- (4) und Chromschichten (7) sind beispielhaft folgende Verfahren:

Zur Erzeugung der haftvermittelnden Goldschicht, z.B. AURUNA^{®} 311, Fa. Umicore Galvanotechnik
Komponenten
- Gold 2 g/l (2 - 4 g/l)
- Weitere Komponenten nach Herstellerangabe

Arbeitsbedingungen:
- pH-Wert 0,6 (0,1 - 0,8)
- Temperatur 35 °C (20 - 40 °C)
- Stromdichte 3 A/dm² (2 - 6 A/dm²)

Zur Erzeugung der haftvermittelnden Nickelschicht:

Komponenten:
- Nickel 40 g/l (35 - 45 g/l)
- Salzsäure 100 ml/l (80 - 120 ml/l)
- Weitere Komponenten nach Herstellerangabe

Arbeitsbedingungen:
- pH-Wert < 1
- Temperatur 22 °C (20 - 40 °C)
- Stromdichte 5 A/dm² (3 - 8 A/dm²)

Besonders bevorzugt ist die Verwendung von Nickel als haftvermittelnde Schicht.

Verfahren zum chemischen Aufbringen einer Nickel-Phosphor Schicht, z.B. Nimuden^{®} 858-AF, Fa. Umicore Galvanotechnik:

Komponenten:
- Nickel 6 g/l (5,7 - 6,3 g/l
- Hypophosphit 30 g/l
- Weitere Komponenten nach Herstellerangabe

Arbeitsbedingungen:
- pH-Wert 4,5 (4,3 - 4,8)
- Temperatur 90 °C (88 - 92 °C)

Verfahren zum elektrolytischen Aufbringen ein Nickel-Phosphor-Schicht, z.B. Niphos^{®} 966, Fa. Umicore Galvanotechnik

Komponenten:
- Nickel 80 g/l (70 - 90 g/l)
- Phosphor 25 g/l (22 - 28 g/l)
- Weitere Komponenten nach Herstellerangabe

Arbeitsbedingungen:
- pH-Wert 2,6 (2,5 - 2,7)
- Temperatur 60 °C (55 - 65 °C)
- Stromdichte 4 A/dm² (3 - 5 A/dm²)

Verfahren zum Aufbringen einer Chromschicht, z.B. Standardelektrolyt aus "Die galvanische Verchromung, S. 55, Lausmann/Unruh, Leuze-Verlag 2006

Komponenten:
- Chromsäure 300 g/l (250 - 300 g/l)
- Sulfat 4 g/l (2,5 - 5 g/l)
- Weitere Komponenten nach Literaturangabe

Arbeitsbedingungen:
- pH-Wert < 1
- Temperatur 55 °C (53 - 57 °C)
- Stromdichte 60 A/dm² (40 - 80 A/dm²)

Die Verfahrensschritte zwischen den einzelnen Prozessschritten (3, 5, 7) sind in der Regel Spülprozesse in Wasser entsprechender Qualität.

## Patentansprüche

1. Haftfester und korrosionsbeständiger Chromschichtaufbau auf einem metallischen Trägermaterial,
**dadurch gekennzeichnet, dass**
auf dem Träger von innen nach außen gesehen eine metallische Schichtenfolge elektrochemisch aufgebracht ist, aufweisend:
a) eine Schicht aus Gold oder Nickel mit einer Dicke zwischen 0,01 - 3 µm;
b) eine Schicht aus einer Nickel-Phosphor-Legierung mit einer Dicke zwischen 2 - 30 µm;
c) eine Schicht aus Gold oder Nickel mit einer Dicke zwischen 0,01 - 3 µm, und abschließend;
d) eine Chromschicht mit einer Dicke zwischen 2 - 30 µm.

2. Chromschichtaufbau nach Anspruch 1,
**dadurch gekennzeichnet, dass**
die Chromschicht eine Korrosionsbeständigkeit aufweist, die > 500 h in der Salznebelprüfung (DIN 50021-SS) beträgt.

3. Chromschichtaufbau nach einem oder mehreren der vorhergehenden Ansprüche,
**dadurch gekennzeichnet, dass**
als metallische Träger solche ausgewählt aus der Gruppe bestehend aus Kolbenstangen, Zylinderkolben, Hydraulikstößel und Stoßdämpferbauteilen in Frage kommen.

4. Chromschichtaufbau nach einem oder mehreren der vorhergehenden Ansprüche,
**dadurch gekennzeichnet, dass**
die innere Gold- bzw. Nickelschicht elektrolytisch abgeschieden wird.

5. Chromschichtaufbau nach einem oder mehreren der vorhergehenden Ansprüche,
**dadurch gekennzeichnet, dass**
die Nickel-Phosphor-Schicht autokatalytisch oder elektrolytisch abgeschieden wird.

6. Chromschichtaufbau nach einem oder mehreren der vorhergehenden Ansprüche,
**dadurch gekennzeichnet, dass**
die äußere Gold- bzw. Nickelschicht elektrolytisch abgeschieden wird.

7. Chromschichtaufbau nach einem oder mehreren der vorhergehenden Ansprüche,
**dadurch gekennzeichnet, dass**
die äußere Chromschicht elektrolytisch aus einem Elektrolyten aufweisend Chrom überwiegend in der Oxidationsstufe +IV abgeschieden wird.

8. Chromschichtaufbau nach einem oder mehreren der vorhergehenden Ansprüche,
**dadurch gekennzeichnet, dass**
die Schichten direkt aufeinander sitzen.

9. Verfahren zur Herstellung eines Chromschichtaufbaus nach einem oder mehreren der vorhergehenden Ansprüche,
**dadurch gekennzeichnet, dass**
man auf einen metallischen Träger
a) eine Schicht aus Gold oder Nickel mit einer Dicke zwischen 0,01 - 3 µm;
b) eine Schicht aus einer Nickel-Phosphor-Legierung mit einer Dicke zwischen 2 - 30 µm;
c) eine Schicht aus Gold oder Nickel mit einer Dicke zwischen 0,01 - 3 µm; und abschließend
d) eine Chromschicht mit einer Dicke zwischen 2 - 30 µm elektrochemisch aufbringt.
